# EUROPEAN PATENT APPLICATION

(11) **EP 4 827 196 A1**
(43) Date of publication of application: **21.10.2026**
(21) Application number: 24905607.8
(22) Date of filing: 22.08.2024
(51) Int. Cl.: H04W 72/04

(54) **RESOURCE CONFIGURATION METHOD AND APPARATUS, AND STORAGE MEDIUM**

(30) Priority: 18.12.2023 CN 202311754859
(71) Applicant: ZTE Corporation, Shenzhen, Guangdong 518057 (CN)
(72) Inventor: LU, Zhaohua, Shenzhen, Guangdong 518057 (CN); XIAO, Huahua, Shenzhen, Guangdong 518057 (CN); LIU, Kun, Shenzhen, Guangdong 518057 (CN); YU, Guanghui, Shenzhen, Guangdong 518057 (CN)
(74) Representative: Ziebig Hengelhaupt Intellectual Property Attorneys Patentanwaltskanzlei PartGmbB
(86) International application number: PCT/CN2024/113901
(87) International publication number: WO 2025/130112

(57) **Abstract**

Provided are a resource configuration method and apparatus, and a storage medium. The resource configuration method comprises: generating first configuration information, wherein the first configuration information is used for indicating a multiplexed transmission resource multiplexed by a reference signal and a data channel; and sending the first configuration information to a second node.

## Description

This application claims priority to Chinese Patent Application No. 202311754859.7, filed on December 18, 2023, which is incorporated herein by reference in its entirety.

### TECHNICAL FIELD

The present disclosure relates to the field of communication technologies, and in particular, to a resource configuration method and device, and a storage medium.

### BACKGROUND

In traditional mobile communications, a demodulation reference signal (DMRS) plays a very important role and may help a receiving end to perform data demodulation, channel estimation, etc. A transmitting end may send the demodulation reference signal via an antenna port, and the receiving end may perform data demodulation based on the received demodulation reference signal.

### SUMMARY

In an aspect, a resource configuration method is provided in the embodiments of the present disclosure. The method includes: generating first configuration information, the first configuration information being used to indicate a multiplexed transmission resource multiplexed for a reference signal and a data channel; and transmitting the first configuration information to a second node.

In another aspect, a resource configuration device is provided in the embodiments of the present disclosure. The device includes: a determining unit and a sending unit. The determining unit is configured to generate first configuration information, and the first configuration information is used to indicate a multiplexed transmission resource multiplexed for a reference signal and a data channel. The sending unit is configured to transmit the first configuration information to a second node.

In yet another aspect, a communication node is provided in the embodiments of the present disclosure. The communication node includes a memory and a processor. The memory is coupled to the processor, and the memory is configured to store a computer program. The processor, upon executing the computer program, performs the resource configuration method described in any aspect described above.

In yet another aspect, a computer-readable storage medium is provided in the embodiments of the present disclosure. The computer-readable storage medium has stored computer program instructions thereon. The computer program instructions, upon being executed on a processor, perform the resource configuration method described in any aspect described above.

### BRIEF DESCRIPTION OF THE DRAWINGS

In order to more clearly describe technical solutions in the present disclosure, the accompanying drawings to be used in some embodiments of the present disclosure will be introduced briefly below. However, the accompanying drawings to be described below are merely accompanying drawings of some embodiments of the present disclosure, and those of ordinary skill in the art may obtain other drawings according to these drawings.
FIG. 1 is a diagram showing an architecture of a system, in accordance with some embodiments;
FIG. 2 is a flow chart of a resource configuration method, in accordance with some embodiments;
FIG. 3 is a schematic diagram of a multiplexed transmission resource for transmitting a demodulation reference signal and data, in accordance with some embodiments;
FIG. 4 is a schematic diagram illustrating that a first subcarrier and a second subcarrier are on different time-domain resources, in accordance with some embodiments;
FIG. 5 is a schematic diagram illustrating that a first subcarrier and a second subcarrier are on a same time-domain resource, in accordance with some embodiments;
FIG. 6 is a schematic diagram illustrating that a first time-domain symbol is after a second time-domain symbol, in accordance with some embodiments;
FIG. 7 is a schematic diagram illustrating that a number of first subcarriers on any first time-domain symbol is less than or equal to a number of second subcarriers on any second time-domain symbol, in accordance with some embodiments;
FIG. 8 is a schematic diagram illustrating that a number of first subcarriers on any first time-domain symbol is greater than a number of second subcarriers on any second time-domain symbol, in accordance with some embodiments;
FIG. 9 is a schematic diagram illustrating that a number of bits corresponding to each modulation symbol of a data channel on a multiplexed transmission resource is less than or equal to a number of bits corresponding to each modulation symbol of the data channel on other transmission resources, in accordance with some embodiments;
FIG. 10 is a schematic diagram showing a structure of a resource configuration device, in accordance with some embodiments;
FIG. 11 is a schematic diagram showing a structure of another resource configuration device, in accordance with some embodiments; and
FIG. 12 is a schematic diagram showing a structure of yet another resource configuration device, in accordance with some embodiments.

### DETAILED DESCRIPTION

The technical solutions in the present disclosure are clearly and completely described below with reference to the accompanying drawings in the present disclosure. However, the described embodiments are merely some, but not all, embodiments of the present disclosure. All other embodiments obtained based on the embodiments of the present disclosure by those of ordinary skill in the art without paying any creative effort will fall within the protection scope of the present disclosure.

It will be noted that in the present disclosure, the term such as "exemplary" or "for example" is used to represent examples, illustrations, or explanations. Any embodiment or design scheme described with "exemplary" or "for example" in the present disclosure is not necessarily to be construed as preferred or advantageous over other embodiments or design schemes. Rather, the use of the term such as "exemplary" or "for example" is intended to present related concepts in a detailed manner.

Hereinafter, the terms such as "first" and "second", are merely used for descriptive purposes, and are not to be understood as indicating or implying the relative importance or implicitly indicating the number of indicated technical features. Thus, a feature limited with "first" or "second", may explicitly or implicitly include one or more of the features.

In the description of the present disclosure, unless otherwise specified, the symbol "/" means "or", for example, "A/B" may mean A or B. Herein, "and/or" is merely an associated relationship for describing associated objects, which means that there may be three relationships, for example, "A and/or B" may mean: only A, only B, and A and B at the same time. In addition, the term such as "at least one" means one or more, and the term such as "a/the plurality of" means two or more.

In traditional mobile communications, a demodulation reference signal plays a very important role and may help a receiving end to perform data demodulation, channel estimation, etc. A transmitting end may send the demodulation reference signal via an antenna port, and the receiving end may perform data demodulation based on the received demodulation reference signal.

However, during the transmission of the demodulation reference signal, the demodulation reference signal requires separate transmission resources for transmission, which causes a waste of transmission resources and reduces the spectral efficiency of the mobile communication system.

To solve the technical problem described above, a resource configuration method is provided in the embodiments of the present disclosure. A first node indicates, to a second node via first configuration information, a transmission resource multiplexed for a reference signal and a data channel. In this way, the reference signal and the data channel may multiplex a transmission resource during transmission of the reference signal, which improves the transmission resource utilization, thereby improving the spectral efficiency.

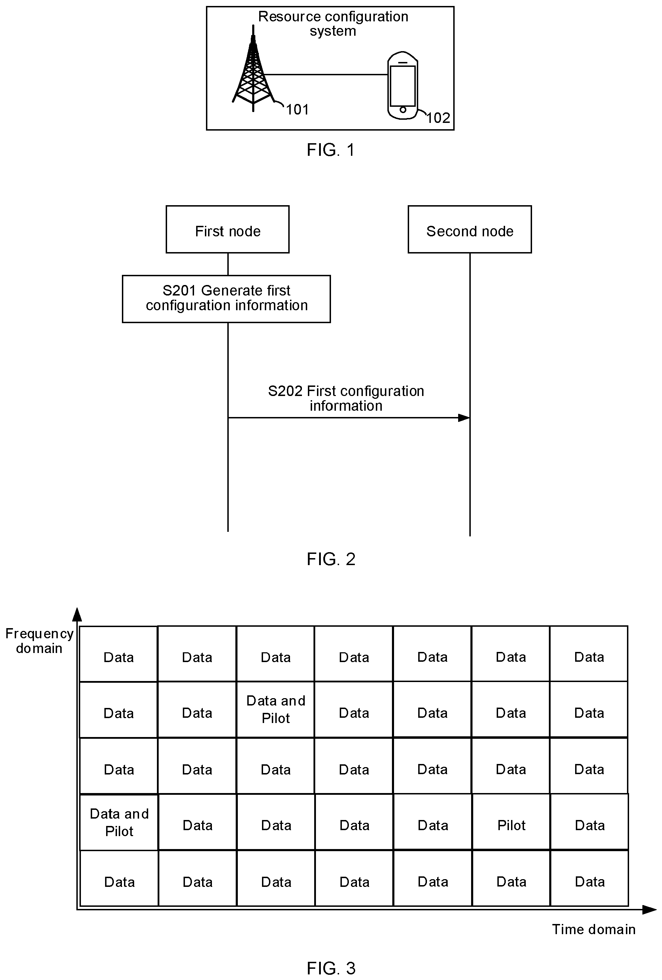

The resource configuration method provided in the embodiments of the present disclosure may be applied to a resource configuration system shown in FIG. 1. As shown in FIG. 1, the resource configuration system includes a first node 101 and a second node 102.

The first node 101 and the second node 102 are communicatively connected with each other.

In some embodiments, the first node 101 may be a base station or other network-side nodes, and the second node 102 may be a terminal. Alternatively, the first node 101 may be a terminal, and the second node 102 may be a base station or other network-side nodes.

As an example, FIG. 1 illustrates an example where the first node 101 is a base station and the second node 102 is a terminal.

In some embodiments, the first node 101 is configured to generate first configuration information and transmit the first configuration information to the second node 102, to indicate, to the second node 102, a multiplexed transmission resource multiplexed for a reference signal and a data channel. In addition, the first node 101 may further configure the reference signal based on the first configuration information, to transmit the reference signal via the multiplexed transmission resource.

The second node 102 is configured to receive the first configuration information and determine, based on the first configuration information, the multiplexed transmission resource multiplexed for the reference signal and the data channel. Then, the second node 102 may receive the reference signal via the determined multiplexed transmission resource, and perform operations such as channel estimation and demodulation based on the reference signal.

It will be noted that FIG. 1 is only an exemplary architecture diagram, and a number of devices and names of the various devices included in FIG. 1 are not limited, and in addition to the devices shown in FIG. 1, the communication system may further include other devices (e.g., a core network device).

Application scenarios of the embodiments of the present disclosure are not limited. The system architectures and the service scenarios described in the embodiments of the present disclosure are intended to more clearly explain the technical solutions in the embodiments of the present disclosure, and do not constitute a limitation on the technical solutions provided in the embodiments of the present disclosure. Those of ordinary skill in the art will know that, with the evolution of network architectures and the emergence of new service scenarios, the technical solutions provided in the embodiments of the present disclosure are also applicable to similar technical problems.

FIG. 2 shows a flow chart of a resource configuration method. As shown in FIG. 2, the resource configuration method includes S201 and S202.

In S201, a first node generates first configuration information.

The first configuration information is used to indicate a multiplexed transmission resource multiplexed for a reference signal and a data channel. In the present disclosure, the reference signal may be a demodulation reference signal (which may also be referred to as a pilot or a demodulation reference signal pilot), or other types of reference signals, such as a channel state information reference signal (CSI-RS), a sounding reference signal (SRS), a phase tracking reference signal (PT-RS), or a positioning reference signal (PRS), and the present disclosure is not limited thereto.

In some implementations, the first node may determine the multiplexed transmission resource multiplexed for the reference signal and the data channel, and generate the first configuration information based on description information (e.g., positions and identification) of the multiplexed transmission resource. In this way, the first node may indicate the multiplexed transmission resource via the description information of the multiplexed transmission resource included in the first configuration information.

It will be noted that after generating the first configuration information, the first node may transmit the reference signal via the multiplexed transmission resource, so that the second node may determine the reference signal transmitted on the multiplexed transmission resource based on the first configuration information and perform channel processing using the reference signal.

In an example where the reference signal is the demodulation reference signal, FIG. 3 shows a schematic diagram of the multiplexed transmission resource for transmitting the demodulation reference signal and data. In FIG. 3, the horizontal axis represents the time domain, the vertical axis represents the frequency domain, and each grid represents a transmission resource in the time and frequency domains. As shown in FIG. 3, the plurality of transmission resources include a transmission resource (i.e., a grid marked only with the word "data" in the figure) occupied by the data channel for data transmission, a transmission resource (i.e., a grid marked only with the word "pilot" in the figure) for pilot transmission, and a transmission resource (i.e., a grid marked with the words "data" and "pilot" in the figure) multiplexed for the pilot and the data channel. In traditional mobile communication systems, the transmission resource occupied by the data channel for data transmission and the transmission resource for pilot transmission are orthogonal (i.e., the transmission resource occupied by the data channel and the transmission resource for pilot transmission are different or do not overlap with each other). However, in the mobile communication system in the embodiments of the present disclosure, the first node may transmit data and pilots via multiplexed transmission resources (i.e., the grids marked with the words "data" and "pilot" in FIG. 3), thereby improving the transmission resource utilization and spectrum efficiency.

In S202, the first node transmits the first configuration information to the second node.

In some embodiments, after generating the first configuration information, the first node may send the first configuration information to the second node via a control channel; alternatively, the first node may send the first configuration information to the second node via higher-layer signaling; alternatively, the first node may send the first configuration information to the second node in other manners, and the present disclosure is not limited thereto.

In this way, the transmission resource utilization and the spectrum efficiency may be improved by the manner in which the reference signal and data channel multiplex the same transmission resource.

It will be noted that in the 4th generation mobile communication technology (4G) standard and the 5th generation mobile communication technology (5G) standard, the demodulation reference signals transmitted via different antenna ports have the same configuration, such as the same number of time-domain symbols, the same number of frequency-domain subcarriers, and the same channel processing mode corresponding to the demodulation reference signal. This will result in poor flexibility in the configuration method of the demodulation reference signal, which fails to meet the intelligent transmission requirements in different service scenarios in future complex networks.

For the technical problem, the first node may further flexibly configure which transmission resource is multiplexed for the reference signal and the data channel, and send the first configuration information to the second node, so as to indicate the transmission resource multiplexed for the reference signal and the data channel. In this way, the configuration of the reference signal may be made flexible and may adapt to diversified requirements.

In some embodiments, the first configuration information may further indicate other information in addition to the multiplexed transmission resource multiplexed for the reference signal and the data channel. For example, the first configuration information indicates relevant information of the multiplexed transmission resource (denoted as Scenario 1), and/or relevant information of a non-multiplexed transmission resource (denoted as Scenario 2). Scenario 1 and Scenario 2 each are described in detail below.

In Scenario 1, the first configuration information indicates relevant information of the multiplexed transmission resource.

The relevant information of the multiplexed transmission resource includes, but is not limited to, at least one of: a power of the reference signal on the multiplexed transmission resource, sequence information of the reference signal on the multiplexed transmission resource, a power of the data channel on the multiplexed transmission resource, a channel processing method corresponding to the reference signal, or modulation information of the data channel.

The reference signal on the multiplexed transmission resource refers to a reference signal transmitted on the transmission resource multiplexed for the reference signal and the data channel. Accordingly, the power of the reference signal on the multiplexed transmission resource is a power of the reference signal transmitted on the transmission resource multiplexed for the reference signal and the data channel. It will be noted that the power in the embodiments of the present disclosure includes a transmission power.

The sequence information of the reference signal on the multiplexed transmission resource may include, but is not limited to, a sequence length, a sequence generation mode, etc. The sequence generation mode may include, but is not limited to: a maximum length linear feedback shift register sequence (m-sequence), a Gold sequence, a chirp sequence, a Zadoff-Chu (ZC) sequence, a pseudo-random sequence, a nonlinearly generated sequence based on artificial intelligence, and a sequence that may be obtained through computer searching.

The data channel on the multiplexed transmission resource refers to a data channel for transmitting data on the transmission resource multiplexed for the reference signal and the data channel. Accordingly, the power of the data channel on the multiplexed transmission resource is a power of the data channel for transmitting data on the transmission resource multiplexed for the reference signal and the data channel.

The channel processing method corresponding to the reference signal refers to description information of a relevant method for the second node to perform channel processing based on the received reference signal. In some embodiments, the relevant method may include a linear method or a nonlinear method, such as a minimum mean square error algorithm, a least squares algorithm, a compressed sensing algorithm, a nonlinear algorithm based on artificial intelligence, and a statistical algorithm based on expectation.

The modulation information of the data channel refers to a modulation mode adopted by the data channel for data transmission.

In Scenario 2, the first configuration information indicates relevant information of the non-multiplexed transmission resource.

The relevant information of the non-multiplexed transmission resource includes, but is not limited to, at least one of: a non-multiplexed transmission resource occupied by the reference signal other than the multiplexed transmission resource, a power of the reference signal on the non-multiplexed transmission resource, and sequence information of the reference signal on the non-multiplexed transmission resource.

The reference signal on the non-multiplexed transmission resource is a reference signal transmitted via the non-multiplexed transmission resource. For the sequence information and power of the reference signal on the non-multiplexed transmission resource, reference may be made to the sequence information and power of the reference signal on the multiplexed transmission resource, and details will not be repeated in the embodiments of the present disclosure.

In some embodiments, the first node may transmit the reference signal via the multiplexed transmission resource multiplexed for the reference signal and the data channel, or the first node may transmit the reference signal separately via an ordinary transmission resource. Therefore, the first configuration information may also be used to indicate a non-multiplexed transmission resource (i.e., a transmission resource other than the multiplexed transmission resource among the transmission resources occupied by the reference signal) used for transmitting only the reference signal.

The relevant content of the multiplexed transmission resource and non-multiplexed transmission resource indicated by the first configuration information is described above. The multiplexed transmission resource and non-multiplexed transmission resource in the embodiments of the present disclosure are described in detail below by considering an example in which the transmission resource includes a time-domain resource and a frequency-domain resource.
1. The frequency-domain resources of the multiplexed transmission resource and the non-multiplexed transmission resource are described in detail.

First, a position of the frequency-domain resource on the time-domain resource is described. In some embodiments, the frequency-domain resource of the multiplexed transmission resource includes a first subcarrier, and the frequency-domain resource of the non-multiplexed transmission resource includes a second subcarrier. The first subcarrier and the second subcarrier are on different time-domain resources, and/or the first subcarrier and the second subcarrier are on the same time-domain resource.

In some embodiments, the time-domain resource may include an orthogonal frequency division multiplexing (OFDM) symbol (which may also be referred to as a time-domain symbol). Therefore, the first subcarrier and the second subcarrier may be on the same OFDM symbol; alternatively, the first subcarrier and the second subcarrier may be on different OFDM symbols. It may be understood that the first subcarrier and the second subcarrier being on the same OFDM symbol may be referred to as the first subcarrier and the second subcarrier being on the same time region; and the first subcarrier and the second subcarrier being on different OFDM symbols may also be referred to as the first subcarrier and the second subcarrier being on different time regions.

It will be noted that since there may be a plurality of first subcarriers and a plurality of second subcarriers, a part of the plurality of first subcarriers may be on the same time-domain resources as a part of the second subcarriers, and another part of the first subcarriers may be on different time-domain resources from another part of the second subcarriers.

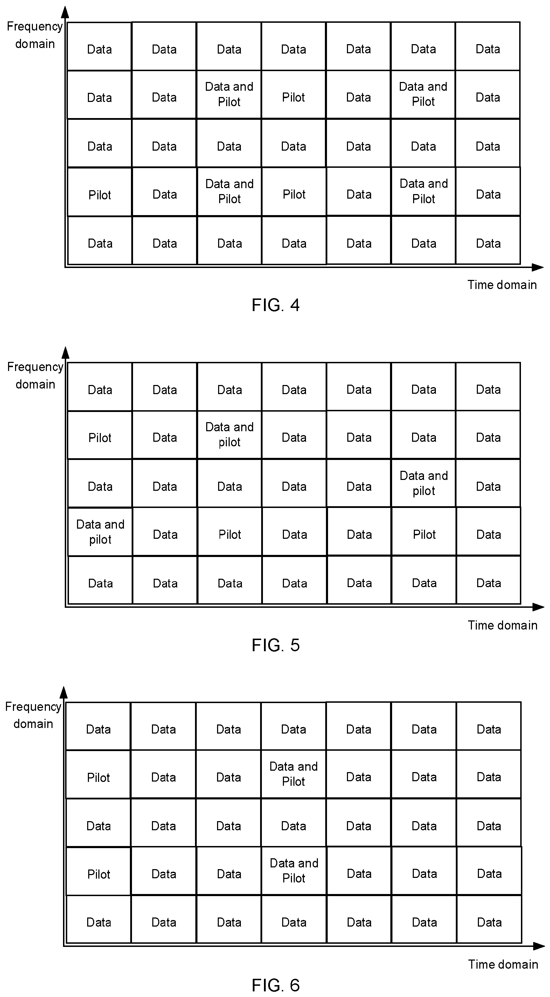

In an example where the reference signal is the demodulation reference signal, FIG. 4 shows a schematic diagram illustrating that the first subcarrier and the second subcarrier are on different time-domain resources. In FIG. 4, the horizontal axis represents the time domain, the vertical axis represents the frequency domain, and each grid represents a transmission resource in the time and frequency domains. As shown in FIG. 4, the plurality of transmission resources include a transmission resource (i.e., a grid marked only with the word "data" in the figure) occupied by the data channel for data transmission, a transmission resource (i.e., a grid marked only with the word "pilot" in the figure) for pilot transmission, and a transmission resource (i.e., a grid marked with the words "data" and "pilot" in the figure) multiplexed for the pilot and the data channel. Since the horizontal axis represents the time domain and the vertical axis represents the frequency domain, the transmission resources are represented as subcarriers on the vertical axis and as time-domain resources on the horizontal axis. The first subcarrier of the multiplexed transmission resource and the second subcarrier of the non-multiplexed transmission resource are on different time regions (i.e., horizontal coordinates of the first subcarrier and second subcarrier are different).

In an example where the reference signal is the demodulation reference signal, FIG. 5 shows a schematic diagram illustrating that the first subcarrier and the second subcarrier are on the same time-domain resource. In FIG. 5, the horizontal axis represents the time domain, the vertical axis represents the frequency domain, and each grid represents a transmission resource in the time and frequency domains. As shown in FIG. 5, the plurality of transmission resources include a transmission resource (i.e., a grid marked only with the word "data" in the figure) occupied by the data channel for data transmission, a transmission resource (i.e., a grid marked only with the word "pilot" in the figure) for pilot transmission, and a transmission resource (i.e., a grid marked with the words "data" and "pilot" in the figure) multiplexed for the pilot and the data channel. Since the horizontal axis represents the time domain and the vertical axis represents the frequency domain, the transmission resources are represented as subcarriers on the vertical axis and as time-domain resources on the horizontal axis. The first subcarrier of the multiplexed transmission resource and the second subcarrier of the non-multiplexed transmission resource are on the same time region (i.e., horizontal coordinates of the first subcarrier and second subcarrier are the same).

Second, the number of frequency-domain resources is described. In the embodiments of the present disclosure, a relationship between the number of frequency-domain resources of multiplexed transmission resources and the number of frequency-domain resources of non-multiplexed transmission resources includes, but is not limited to, any one of the following Cases 1 to 4, which are described in detail below.

In Case 1, the number of first subcarriers on any first time-domain symbol is less than or equal to the number of second subcarriers on any second time-domain symbol.

The first time-domain symbol is a time-domain symbol occupied by the multiplexed transmission resource, and/or a time-domain symbol jointly occupied by the multiplexed transmission resource and non-multiplexed transmission resource; the second time-domain symbol is a time-domain symbol occupied by the non-multiplexed transmission resource, and/or a time-domain symbol jointly occupied by the multiplexed transmission resource and non-multiplexed transmission resource.

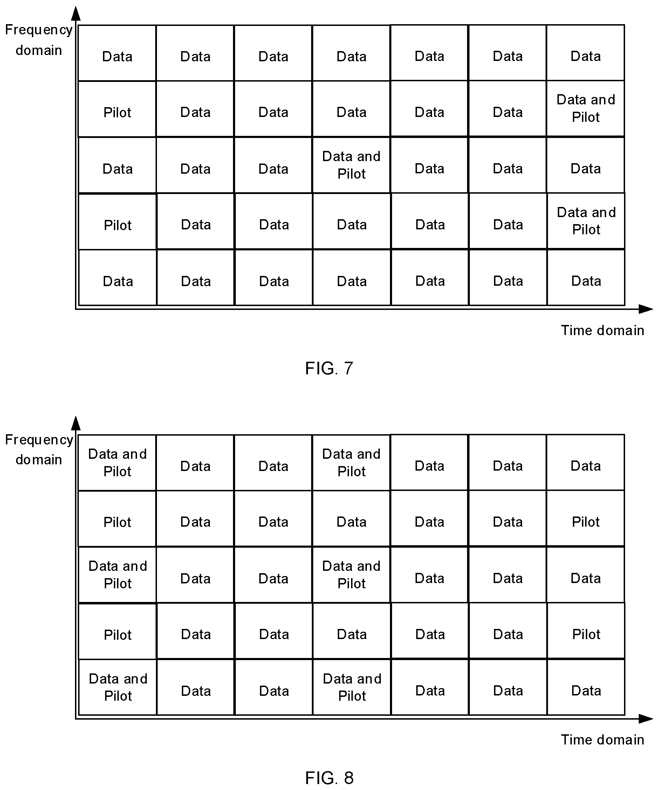

In an example where the reference signal is the demodulation reference signal, FIG. 7 shows a schematic diagram illustrating that the number of first subcarriers on any first time-domain symbol is less than or equal to the number of second subcarriers on any second time-domain symbol. In FIG. 7, the horizontal axis represents the time domain, the vertical axis represents the frequency domain, and each grid represents a transmission resource in the time and frequency domains. As shown in FIG. 7, the plurality of transmission resources include a transmission resource (i.e., a grid marked only with the word "data" in the figure) occupied by the data channel for data transmission, a transmission resource (i.e., a grid marked only with the word "pilot" in the figure) for pilot transmission, and a transmission resource (i.e., a grid marked with the words "data" and "pilot" in the figure) multiplexed for the pilot and the data channel. Since the horizontal axis represents the time domain, a vertical column may be used to represent a time-domain symbol. As shown in FIG. 7, the number of first subcarriers on the first time-domain symbol of the multiplexed transmission resource is equal to 1 or 2, and the number of second subcarriers on the second time-domain symbol of the non-multiplexed transmission resource is equal to 2. Therefore, the number of first subcarriers on any first time-domain symbol is less than or equal to the number of second subcarriers on any second time-domain symbol.

In Case 2, the number of first subcarriers on any first time-domain symbol is less than or equal to the number of second subcarriers on any second time-domain symbol.

In an example where the reference signal is the demodulation reference signal, FIG. 8 shows a schematic diagram illustrating that the number of first subcarriers on any first time-domain symbol is greater than the number of second subcarriers on any second time-domain symbol. In FIG. 8, the horizontal axis represents the time domain, the vertical axis represents the frequency domain, and each grid represents a transmission resource in the time and frequency domains. As shown in FIG. 8, the plurality of transmission resources include a transmission resource (i.e., a grid marked only with the word "data" in the figure) occupied by the data channel for data transmission, a transmission resource (i.e., a grid marked only with the word "pilot" in the figure) for pilot transmission, and a transmission resource (i.e., a grid marked with the words "data" and "pilot" in the figure) multiplexed for the pilot and the data channel. Since the horizontal axis represents the time domain, a vertical column may be used to represent a time-domain symbol. As shown in FIG. 8, the number of first subcarriers on the first time-domain symbol of the multiplexed transmission resource is equal to 3, and the number of second subcarriers on the second time-domain symbol of the non-multiplexed transmission resource is equal to 2. Therefore, the number of first subcarriers on any first time-domain symbol is greater than the number of second subcarriers on any second time-domain symbol.

In Case 3, the number of first subcarriers in the multiplexed transmission resource is greater than the number of second subcarriers in the non-multiplexed transmission resource.

In Case 4, the number of first subcarriers in the multiplexed transmission resource is less than or equal to the number of second subcarriers in the non-multiplexed transmission resource.

It will be noted that for Cases 3 and 4, the number of first subcarriers in the multiplexed transmission resource is the number of all first subcarriers occupied in all multiplexed transmission resources, and the number of second subcarriers in the non-multiplexed transmission resource is the number of all second subcarriers occupied in all non-multiplexed transmission resources.

2. The time-domain resources of the multiplexed transmission resource and the non-multiplexed transmission resource are described in detail.

In some embodiments, the time-domain resource of the multiplexed transmission resource includes a first time-domain symbol; the time-domain resource of the non-multiplexed transmission resource includes a second time-domain symbol; and the first time-domain symbol is after the second time-domain symbol.

It may be understood that the first time-domain symbol of the multiplexed transmission resource being after the second time-domain symbol of the non-multiplexed transmission resource may also be understood as follows: the first node first sends a reference signal to the second node on the non-multiplexed transmission resource, and then sends the reference signal to the second node on the multiplexed transmission resource. The reference signal on the multiplexed transmission resource is affected by the data to be transmitted via the data channel on the multiplexed transmission resource, whereas the reference signal on the non-multiplexed transmission resource is not affected by the data. Therefore, the first node first transmits the reference signal to the second node on the non-multiplexed transmission resource, enabling the second node to determine channel information based on the unaffected reference signal on the non-multiplexed transmission resource, so that the determined channel information may be accurate. After that, the first node sends the reference signal to the second node on the multiplexed transmission resource, and the second node determines the channel information based on both the reference signal on the non-multiplexed transmission resource and the reference signal on the multiplexed transmission resource, thereby saving transmission resources for transmitting the reference signal without affecting the accuracy of the channel information.

In an example where the reference signal is the demodulation reference signal, FIG. 6 shows a schematic diagram illustrating that the first time-domain symbol is after the second time-domain symbol. In FIG. 6, the horizontal axis represents the time domain, the vertical axis represents the frequency domain, and each grid represents a transmission resource in the time and frequency domains. As shown in FIG. 6, the plurality of transmission resources include a transmission resource (i.e., a grid marked only with the word "data" in the figure) occupied by the data channel for data transmission, a transmission resource (i.e., a grid marked only with the word "pilot" in the figure) for pilot transmission, and a transmission resource (i.e., a grid marked with the words "data" and "pilot" in the figure) multiplexed for the pilot and the data channel. Since the horizontal axis represents the time domain, a vertical column may be used to represent a time-domain symbol. As shown in FIG. 6, the time domain may represent time, and the multiplexed transmission resource is after the non-multiplexed transmission resource on the horizontal axis (i.e., in time). In other words, the first time-domain symbol of the multiplexed transmission resource is after the second time-domain symbol of the non-multiplexed transmission resource.

It will be noted that the first time-domain symbol may also be before the second time-domain symbol, or the first time-domain symbol may also be the same as the second time-domain symbol.

3. For the modulation information of the data channel, a number of bits corresponding to a modulation symbol of the multiplexed transmission resource and a number of bits corresponding to a modulation symbol of other transmission resources are described in detail.

In some embodiments, the modulation information of the data channel includes at least two modulation modes, and the at least two modulation modes include a modulation mode of the data channel on the multiplexed transmission resource and a modulation mode of the data channel on other transmission resources. The other transmission resources include the transmission resources occupied by the data channel other than the multiplexed transmission resource. The number of bits corresponding to each modulation symbol of the data channel on the multiplexed transmission resource is less than or equal to the number of bits corresponding to each modulation symbol of the data channel on other transmission resources.

In some implementations, the multiplexed transmission resource is the transmission resource multiplexed for the data channel and the reference signal, and the other transmission resources are the transmission resources (i.e., transmission resources only for data transmission) occupied by the data channel other than the multiplexed transmission resource. The first node may modulate data using the modulation modes when transmitting data via the transmission resources, to obtain the modulation symbols corresponding to each data. During the modulation, the first node may use different modulation modes to modulate data to be transmitted on the multiplexed transmission resource and data to be transmitted on the other transmission resources. Moreover, the number of bits corresponding to each modulation symbol on the multiplexed transmission resource may be less than or equal to the number of bits corresponding to each modulation symbol on the other transmission resources. Furthermore, since the data on the multiplexed transmission resource uses a different modulation mode from the data on the other transmission resources, interference between the reference signal and the data to be transmitted on the data channel may be reduced, thereby improving the accuracy of channel estimation.

It will be noted that the data channel may have one or more modulation modes on the other transmission resources, so that the modulation information of the data channel includes at least two modulation modes.

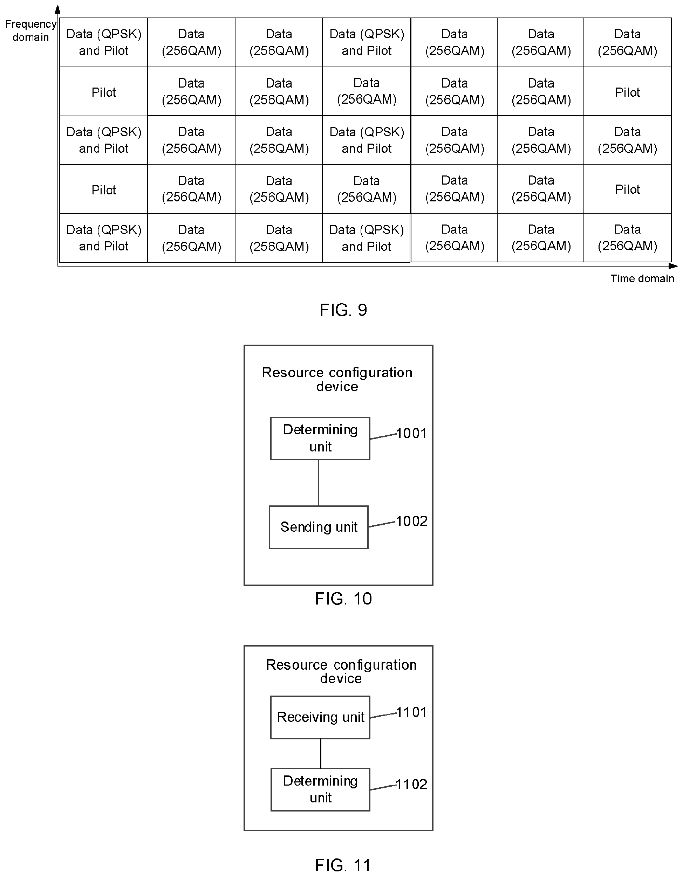

In an example where the reference signal is the demodulation reference signal, FIG. 9 shows a schematic diagram illustrating that the number of bits corresponding to each modulation symbol of the data channel on the multiplexed transmission resource is less than or equal to the number of bits corresponding to each modulation symbol of the data channel on other transmission resources. In FIG. 9, the horizontal axis represents the time domain, the vertical axis represents the frequency domain, and each grid represents a transmission resource in the time and frequency domains. As shown in FIG. 9, the plurality of transmission resources include a transmission resource (i.e., a grid marked only with the word "data" in the figure) occupied by the data channel for data transmission, a transmission resource (i.e., a grid marked only with the word "pilot" in the figure) for pilot transmission, and a transmission resource (i.e., a grid marked with the words "data" and "pilot" in the figure) multiplexed for the pilot and the data channel.

A modulation mode for data on the multiplexed transmission resource includes quadrature phase shift keying (QPSK), while a modulation mode for data on the other transmission resources includes 256-ary quadrature amplitude modulation (256QAM). Since the two have different modulation modes, the number of bits corresponding to each modulation symbol on the multiplexed transmission resource is different from the number of bits corresponding to each modulation symbol on the other transmission resources, and the number of bits corresponding to each modulation symbol on the multiplexed transmission resource is less than or equal to the number of bits corresponding to each modulation symbol on the other transmission resources.

4. The power of the reference signal on the multiplexed transmission resource and the power of the data channel on the multiplexed transmission resource are described in detail.

In some embodiments, a sum of the power of the reference signal on the multiplexed transmission resource and the power of the data channel on the multiplexed transmission resource is greater than or equal to a power of the data channel on other transmission resources. The other transmission resources include the transmission resources occupied by the data channel other than the multiplexed transmission resource.

In some implementations, when configuring the transmission resources, the first node may make the sum of the power of the reference signal on the multiplexed transmission resource and the power of the data channel on the multiplexed transmission resource greater than or equal to the power of the data channel on the other transmission resources.

The multiplexed transmission resource and non-multiplexed transmission resource in the embodiments of the present disclosure are described in detail above by considering an example in which the transmission resource includes the time-domain resource and the frequency-domain resource. A manner in which a plurality of parameters in the first configuration information are indicated via a field is described in detail below.

In some embodiments, the first configuration information includes any one of: a first field, a second field, a third field, a fourth field, or a fifth field. The different fields are used to indicate different contents in the first configuration information. The first field, second field, third field, fourth field, and fifth field each are described in detail below.

For the first field, the first field is used to indicate the multiplexed transmission resource, the power of the reference signal on the multiplexed transmission resource, and the power of the data channel on the multiplexed transmission resource.

For the second field, the second field is used to indicate the power of the reference signal on the multiplexed transmission resource, the power of the data channel on the multiplexed transmission resource, and the modulation mode of the data channel on the multiplexed transmission resource.

For the third field, the third field is used to indicate the multiplexed transmission resource, the power of the reference signal on the multiplexed transmission resource, the power of the data channel on the multiplexed transmission resource, and the modulation mode of the data channel on the multiplexed transmission resource.

For the fourth field, the fourth field is used to indicate the power of the reference signal on the multiplexed transmission resource, the power of the data channel on the multiplexed transmission resource, and the modulation information of the data channel.

For the fifth field, the fifth field is used to indicate the multiplexed transmission resource, the power of the reference signal on the multiplexed transmission resource, the power of the data channel on the multiplexed transmission resource, and the modulation information of the data channel.

It will be noted that the modulation information of the data channel includes the modulation mode of the data channel on the multiplexed transmission resource.

In some embodiments, the first configuration information may be transmitted via downlink control information (DCI). Accordingly, the downlink control information includes any one of the first field, second field, third field, fourth field, or fifth field in the first configuration information.

In some implementations, the first node may indicate a parameter set via a field (e.g., the first field, the second field, the third field, the fourth field, and the fifth field) in downlink control information (or via higher-layer signaling, media access control signaling, or physical layer signaling). The parameter set may include at least one of: the multiplexed transmission resource, the power of the reference signal on the multiplexed transmission resource, the power of the data channel on the multiplexed transmission resource, the modulation mode of the data channel on the multiplexed transmission resource, or the modulation information of the data channel.

The first configuration information may indicate, via a field, both a parameter set and a value of each parameter in the parameter set. In this way, the second node may determine, based on the field, the parameter set to be transmitted and the value of each parameter in the parameter set, thereby saving fields and transmission resources.

In an example where the first configuration information includes the first field, as shown in Table 1, a value of the first field includes 1 and 2. In response to the value of the first field being equal to 1, the first field is used to indicate a first set of configuration information. The first set of configuration information is a set of parameter values of the multiplexed transmission resource, the power of the reference signal on the multiplexed transmission resource, and the power of the data channel on the multiplexed transmission resource. In response to the first field being equal to 2, the first field represents a second set of configuration information. The second set of configuration information is another set of parameter values of the multiplexed transmission resource, the power of the reference signal on the multiplexed transmission resource, and the power of the data channel on the multiplexed transmission resource.

**Table 1**

| First field | Multiplexed transmission resource | Power of the reference signal on the multiplexed transmission resource | Power of the data channel on the multiplexed transmission resource |
|---|---|---|---|
| 1 | First set of configuration information | | |
| 2 | Second set of configuration information | | |

The manner in which the plurality of parameters in the first configuration information are indicated via the field is described in detail above. The parameters indicated by the first configuration information are described in detail below by means of the modulation information of the data channel.

In some embodiments, a value of the number of multiplexed transmission resources is determined based on the modulation information of the data channel.

Alternatively, a value of the power of the reference signal on the multiplexed transmission resource is determined based on the modulation information of the data channel, and/or a value of the power of the data channel on the multiplexed transmission resource is determined based on the modulation information of the data channel.

Alternatively, a value of the number of non-multiplexed transmission resources is determined based on the modulation information of the data channel, and the non-multiplexed transmission resource is a transmission resource occupied by the reference signal other than the multiplexed transmission resource.

Alternatively, a value of the sequence generation mode of the reference signal on the multiplexed transmission resource is determined based on the modulation information of the data channel, and/or a value of the sequence generation mode of the reference signal on the non-multiplexed transmission resource is determined based on the modulation information of the data channel.

In some implementations, the first node may determine, based on the modulation information of the data channel, values of some parameters, such as the number of multiplexed transmission resources, the power of the reference signal on the multiplexed transmission resource, the number of non-multiplexed transmission resources, the sequence generation mode of the reference signal on the multiplexed transmission resource, and the sequence generation mode of the reference signal on the non-multiplexed transmission resource. In this way, after receiving the first configuration information, the second node may determine the values of the parameters described above based on the modulation information of the data channel indicated by the first configuration information, thereby saving fields and transmission resources.

For the value of the number of multiplexed transmission resources, the first node may determine the value of the number of multiplexed transmission resources based on the modulation mode in the modulation information of the data channel. For example, if the first node determines that the modulation mode of the data channel in the modulation information of the data channel is 256QAM, the first node may determine that a proportion of the number of multiplexed transmission resources to the number of all transmission resources occupied by the data channel is less than or equal to 10%. If the first node determines that the modulation mode of the data channel in the modulation information of the data channel is 64QAM, the first node may determine that the proportion of the number of multiplexed transmission resources to the number of all transmission resources occupied by the data channel is less than or equal to 30%.

It will be noted that the first node may respectively indicate, via two fields, the modulation mode of the data channel and the number of multiplexed transmission resources (or the power of the reference signal on the multiplexed transmission resource, the number of non-multiplexed transmission resources, the sequence generation mode of the reference signal on the multiplexed transmission resource, and the sequence generation mode of the reference signal on the non-multiplexed transmission resource). For example, the first node may use fields to represent the modulation information of the data channel and the number of multiplexed transmission resources. In response to the first "1" in a field "11" indicating that the modulation mode of the data channel in the modulation information of the data channel is 256QAM, the second "1" in the field "11" may indicate that the number of multiplexed transmission resources is equal to 5. In response to the "0" in a field "01" indicating that the modulation mode of the data channel in the modulation information of the data channel is 64QAM, the "1" in the field "01" may indicate that the number of multiplexed transmission resources is equal to 10.

For the value of the power of the reference signal on the multiplexed transmission resource, and/or the value of the power of the data channel on the multiplexed transmission resource, the first node may determine, based on the modulation mode in the modulation information of the data channel, the value of the power of the reference signal on the multiplexed transmission resource, and/or the value of the power of the data channel on the multiplexed transmission resource. For example, if the first node determines that the modulation mode of the data channel in the modulation information of the data channel is 256QAM, the first node may determine that a difference between the power of the reference signal on the multiplexed transmission resource and the power of the reference signal on the non-multiplexed transmission resource is greater than or equal to 50%. If the modulation mode of the data channel is 64QAM, the first node may determine that the difference between the power of the reference signal on the multiplexed transmission resource and the power of the reference signal on the non-multiplexed transmission resource is greater than or equal to 30%.

For the value of the number of non-multiplexed transmission resources, the first node may determine the value of the number of non-multiplexed transmission resources based on the modulation mode in the modulation information of the data channel. For example, if the first node determines that the modulation mode of the data channel in the modulation information of the data channel is 256QAM, a proportion of the number of non-multiplexed transmission resources to the number of all transmission resources occupied by the data channel is less than or equal to 5%. For example, the number of non-multiplexed transmission resources is less than or equal to 5% of the number of all transmission resources occupied by the data channel. If the modulation mode of the data channel is 64 QAM, the proportion of the number of non-multiplexed transmission resources to the number of all transmission resources occupied by the data channel is less than or equal to 15%. For example, the number of non-multiplexed transmission resources is less than or equal to 15% of the number of all transmission resources occupied by the data channel.

For the value of the sequence generation mode of the reference signal on the multiplexed transmission resource, and/or the value of the sequence generation mode of the reference signal on the non-multiplexed transmission resource, if the first node determines that the modulation mode of the data channel in the modulation information of the data channel is 256QAM, the first node may select, from a plurality of sequence generation modes (assuming there are eight sequence generation modes), sequence generation modes (e.g., the first four of the eight sequence generation modes) corresponding to 256QAM. If the modulation mode of the data channel is 64QAM, the first node may select sequence generation modes (e.g., the last four of the eight sequence generation modes) corresponding to 64QAM from the plurality of sequence generation modes.

It will be noted that all transmission resources occupied by the data channel include the other transmission resources and the multiplexed transmission resource occupied by the data channel.

For the relevant description of the first configuration information when the second node receives the first configuration information sent by the first node, reference may be made to the specific description of the first configuration information sent by the first node, and details will not be repeated in the embodiments of the present disclosure.

It may be understood that, in order to implement the functions described above, a resource configuration device includes corresponding hardware structures and/or corresponding software modules for performing various functions. Those skilled in the art will easily realize that the present disclosure may be implemented in the form of hardware or a combination of hardware and computer software, with reference to the algorithm steps of the examples described in the embodiments of the present disclosure. Whether a function is performed by hardware or computer software-driven hardware depends on the specific applications and design constraints of the technical solutions. Professional technicians may use different methods to implement the described functions for each particular application, but such implementation will not be considered beyond the scope of the present disclosure.

In the embodiments of the present disclosure, the resource configuration device may be divided into functional modules according to the method embodiments described above. For example, each functional module may be divided corresponding to each function, or two or more functions may be integrated into one functional module. The integrated module described above may be implemented in the form of hardware or software. It will be noted that the division of modules in the embodiments of the present disclosure is schematic, and is merely a kind of logical function division, and there may be other division manners in actual implementation. The description is given below by considering an example in which each functional module is divided corresponding to each function.

FIG. 10 is a schematic diagram showing a structure of a resource configuration device provided in the embodiments of the present disclosure, and the resource configuration device may perform the resource configuration method provided in the method embodiments described above. As shown in FIG. 10, the resource configuration device includes a determining unit 1001 and a sending unit 1002.

The determining unit 1001 is configured to generate first configuration information. The first configuration information is used to indicate a multiplexed transmission resource multiplexed for a reference signal and a data channel.

The sending unit 1002 is configured to send the first configuration information to the second node.

In some embodiments, the first configuration information is further used to indicate at least one of: a power of the reference signal on the multiplexed transmission resource, sequence information of the reference signal on the multiplexed transmission resource, a power of the data channel on the multiplexed transmission resource, a channel processing method corresponding to the reference signal, or modulation information of the data channel.

In some embodiments, the first configuration information is further used to indicate a non-multiplexed transmission resource occupied by the reference signal other than the multiplexed transmission resource.

In some embodiments, the first configuration information is further used to indicate a power of the reference signal on the non-multiplexed transmission resource, and/or sequence information of the reference signal on the non-multiplexed transmission resource.

In some embodiments, a frequency-domain resource of the multiplexed transmission resource includes a first subcarrier, and a frequency-domain resource of the non-multiplexed transmission resource includes a second subcarrier. The first subcarrier and the second subcarrier are on different time-domain resources, and/or the first subcarrier and the second subcarrier are on the same time-domain resource.

In some embodiments, a time-domain resource of the multiplexed transmission resource includes a first time-domain symbol; a time-domain resource of the non-multiplexed transmission resource includes a second time-domain symbol; and the first time-domain symbol is after the second time-domain symbol.

In some embodiments, a number of first subcarriers on any first time-domain symbol is greater than a number of second subcarriers on any second time-domain symbol. The first time-domain symbol is a time-domain symbol occupied by the multiplexed transmission resource, and/or a time-domain symbol jointly occupied by the multiplexed transmission resource and the non-multiplexed transmission resource; the second time-domain symbol is a time-domain symbol occupied by the non-multiplexed transmission resource, and/or a time-domain symbol jointly occupied by the multiplexed transmission resource and the non-multiplexed transmission resource. Alternatively, the number of first subcarriers on any first time-domain symbol is less than or equal to the number of second subcarriers on any second time-domain symbol. Alternatively, the number of first subcarriers in the multiplexed transmission resource is greater than the number of second subcarriers in the non-multiplexed transmission resource. Alternatively, the number of first subcarriers in the multiplexed transmission resource is less than or equal to the number of second subcarriers in the non-multiplexed transmission resource.

In some embodiments, the first configuration information is transmitted via downlink control information.

In some embodiments, the first configuration information includes a first field, and the first field is used to indicate the multiplexed transmission resource, the power of the reference signal on the multiplexed transmission resource, and the power of the data channel on the multiplexed transmission resource. Alternatively, the first configuration information includes a second field, and the second field is used to indicate the power of the reference signal on the multiplexed transmission resource, the power of the data channel on the multiplexed transmission resource, and the modulation mode of the data channel on the multiplexed transmission resource. Alternatively, the first configuration information includes a third field, and the third field is used to indicate the multiplexed transmission resource, the power of the reference signal on the multiplexed transmission resource, the power of the data channel on the multiplexed transmission resource, and the modulation mode of the data channel on the multiplexed transmission resource. Alternatively, the first configuration information includes a fourth field, and the fourth field is used to indicate the power of the reference signal on the multiplexed transmission resource, the power of the data channel on the multiplexed transmission resource, and the modulation information of the data channel. Alternatively, the first configuration information includes a fifth field, and the fifth field is used to indicate the multiplexed transmission resource, the power of the reference signal on the multiplexed transmission resource, the power of the data channel on the multiplexed transmission resource, and the modulation information of the data channel.

In some embodiments, the modulation information of the data channel includes at least two modulation modes, and the at least two modulation modes include a modulation mode of the data channel on the multiplexed transmission resource and a modulation mode of the data channel on other transmission resources. The other transmission resources include the transmission resources occupied by the data channel other than the multiplexed transmission resource. The number of bits corresponding to each modulation symbol of the data channel on the multiplexed transmission resource is less than or equal to the number of bits corresponding to each modulation symbol of the data channel on the other transmission resources.

In some embodiments, a value of the number of multiplexed transmission resources is determined based on the modulation information of the data channel; alternatively, a value of the power of the reference signal on the multiplexed transmission resource is determined based on the modulation information of the data channel, and/or a value of the power of the data channel on the multiplexed transmission resource is determined based on the modulation information of the data channel; alternatively, a value of the number of non-multiplexed transmission resources is determined based on the modulation information of the data channel, and the non-multiplexed transmission resource is a transmission resource occupied by the reference signal other than the multiplexed transmission resource; alternatively, a value of the sequence generation mode of the reference signal on the multiplexed transmission resource is determined based on the modulation information of the data channel, and/or a value of the sequence generation mode of the reference signal on the non-multiplexed transmission resource is determined based on the modulation information of the data channel.

In some embodiments, a sum of the power of the reference signal on the multiplexed transmission resource and the power of the data channel on the multiplexed transmission resource is greater than or equal to a power of the data channel on other transmission resources. The other transmission resources include the transmission resources occupied by the data channel other than the multiplexed transmission resource.

FIG. 11 is a schematic diagram showing a structure of another resource configuration device provided in the embodiments of the present disclosure, and the resource configuration device may perform the resource configuration method provided in the method embodiments described above. As shown in FIG. 11, the resource configuration device includes a receiving unit 1101 and a determining unit 1102.

The receiving unit 1101 is configured to receive first configuration information sent by the first node. The first configuration information is used to indicate a multiplexed transmission resource multiplexed for a reference signal and a data channel.

The determining unit 1102 is configured to determine the reference signal based on the first configuration information.

In some embodiments, the first configuration information is further used to indicate at least one of: a power of the reference signal on the multiplexed transmission resource, sequence information of the reference signal on the multiplexed transmission resource, a power of the data channel on the multiplexed transmission resource, a channel processing method corresponding to the reference signal, or modulation information of the data channel.

In some embodiments, the first configuration information is further used to indicate a non-multiplexed transmission resource occupied by the reference signal other than the multiplexed transmission resource.

In some embodiments, the first configuration information is further used to indicate a power of the reference signal on the non-multiplexed transmission resource and sequence information of the reference signal on the non-multiplexed transmission resource.

In some embodiments, a frequency-domain resource of the multiplexed transmission resource includes a first subcarrier, and a frequency-domain resource of the non-multiplexed transmission resource includes a second subcarrier. The first subcarrier and the second subcarrier are on different time-domain resources, and/or the first subcarrier and the second subcarrier are on the same time-domain resource.

In some embodiments, a time-domain resource of the multiplexed transmission resource includes a first time-domain symbol; a time-domain resource of the non-multiplexed transmission resource includes a second time-domain symbol; and the first time-domain symbol is after the second time-domain symbol.

In some embodiments, a number of first subcarriers on any first time-domain symbol is greater than a number of second subcarriers on any second time-domain symbol. The first time-domain symbol is a time-domain symbol occupied by the multiplexed transmission resource, and/or a time-domain symbol jointly occupied by the multiplexed transmission resource and the non-multiplexed transmission resource; the second time-domain symbol is a time-domain symbol occupied by the non-multiplexed transmission resource, and/or a time-domain symbol jointly occupied by the multiplexed transmission resource and the non-multiplexed transmission resource. Alternatively, the number of first subcarriers on any first time-domain symbol is less than or equal to the number of second subcarriers on any second time-domain symbol. Alternatively, the number of first subcarriers in the multiplexed transmission resource is greater than the number of second subcarriers in the non-multiplexed transmission resource. Alternatively, the number of first subcarriers in the multiplexed transmission resource is less than or equal to the number of second subcarriers in the non-multiplexed transmission resource.

In some embodiments, the first configuration information is transmitted via downlink control information.

In some embodiments, the first configuration information includes a first field, and the first field is used to indicate the multiplexed transmission resource, the power of the reference signal on the multiplexed transmission resource, and the power of the data channel on the multiplexed transmission resource. Alternatively, the first configuration information includes a second field, and the second field is used to indicate the power of the reference signal on the multiplexed transmission resource, the power of the data channel on the multiplexed transmission resource, and the modulation mode of the data channel on the multiplexed transmission resource. Alternatively, the first configuration information includes a third field, and the third field is used to indicate the multiplexed transmission resource, the power of the reference signal on the multiplexed transmission resource, the power of the data channel on the multiplexed transmission resource, and the modulation mode of the data channel on the multiplexed transmission resource. Alternatively, the first configuration information includes a fourth field, and the fourth field is used to indicate the power of the reference signal on the multiplexed transmission resource, the power of the data channel on the multiplexed transmission resource, and the modulation information of the data channel. Alternatively, the first configuration information includes a fifth field, and the fifth field is used to indicate the multiplexed transmission resource, the power of the reference signal on the multiplexed transmission resource, the power of the data channel on the multiplexed transmission resource, and the modulation information of the data channel.

In some embodiments, the modulation information of the data channel includes at least two modulation modes. The at least two modulation modes include a modulation mode of the data channel on the multiplexed transmission resource and a modulation mode of the data channel on other transmission resources. The other transmission resources are the transmission resources occupied by the data channel other than the multiplexed transmission resource.

The number of bits corresponding to each modulation symbol of the data channel on the multiplexed transmission resource is less than or equal to the number of bits corresponding to each modulation symbol of the data channel on the other transmission resources.

In some embodiments, a value of the number of multiplexed transmission resources is determined based on the modulation information of the data channel; alternatively, a value of the power of the reference signal on the multiplexed transmission resource is determined based on the modulation information of the data channel, and/or a value of the power of the data channel on the multiplexed transmission resource is determined based on the modulation information of the data channel; alternatively, a value of the number of non-multiplexed transmission resources is determined based on the modulation information of the data channel, and the non-multiplexed transmission resource is a transmission resource occupied by the reference signal other than the multiplexed transmission resource; alternatively, a value of the sequence generation mode of the reference signal on the multiplexed transmission resource is determined based on the modulation information of the data channel, and/or a value of the sequence generation mode of the reference signal on the non-multiplexed transmission resource is determined based on the modulation information of the data channel.

In some embodiments, a sum of the power of the reference signal on the multiplexed transmission resource and the power of the data channel on the multiplexed transmission resource is greater than or equal to a power of the data channel on other transmission resources. The other transmission resources include the transmission resources occupied by the data channel other than the multiplexed transmission resource.

It will be noted that the first node may generate the data channel based on the first configuration information and send the data channel to the second node. The second node may also generate the data channel based on the first configuration information and send the data channel to the first node.

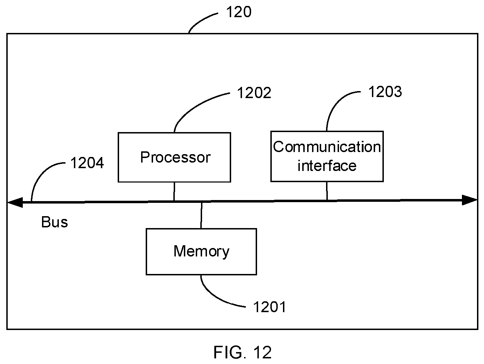

In a case where the functions of the integrated modules described above are implemented in the form of hardware, another structure of the resource configuration device involved in the embodiments described above is provided in the embodiments of the present disclosure. As shown in FIG. 12, the resource configuration device 120 includes a processor 1202 and a bus 1204. In some embodiments, the resource configuration device may further include a memory 1201; in some embodiments, the resource configuration device may further include a communication interface 1203.

The processor 1202 may implement or execute various exemplary logical blocks, modules, and circuits described in conjunction with the embodiments of the present disclosure. The processor 1202 may be a central processing unit, a general-purpose processor, a digital signal processor, an application specific integrated circuit, a field programmable gate array, or other programmable logic components, a transistor logic component, a hardware component, or any combination thereof. The processor 1202 may implement or execute various exemplary logical blocks, modules, and circuits described in conjunction with the embodiments of the present disclosure. The processor 1202 may also be a combination for implementing computing functions, such as a combination of one or more microprocessors, or a combination of a digital signal processor (DSP) and a microprocessor.

The communication interface 1203 is configured to connect to other devices via a communication network. The communication network may be an Ethernet, a radio access network, a wireless local area network (WLAN), or the like.

The memory 1201 may be, but is not limited to, a read-only memory (ROM) or other types of static storage devices capable of storing static information and instructions, a random access memory (RAM) or other types of dynamic storage devices capable of storing information and instructions, or an electrically erasable programmable read-only memory (EEPROM), a magnetic disk storage medium or other magnetic storage device, or any other medium capable of being used to carry or store desired program codes and capable of being accessed by a computer, where the desired program codes have instructions or are in the form of data structures.

As an implementation, the memory 1201 may exist independently of the processor 1202, and the memory 1201 may be connected to the processor 1202 via the bus 1204 and configured to store instructions or program codes. When invoking and executing the instructions or program codes stored in the memory 1201, the processor 1202 may perform the resource configuration method provided in the embodiments of the present disclosure.

In another implementation, the memory 1201 may also be integrated with the processor 1202.

The bus 1204 may be an extended industry standard architecture (EISA) bus or the like. The bus 1204 may be classified as an address bus, a data bus, a control bus, and the like. For convenience of representation, only one bold line is used in FIG. 12, but this does not mean that there is only one bus or only one type of bus.

A computer-readable storage medium (e.g., a non-transitory computer-readable storage medium) is provided in some embodiments of the present disclosure. The computer-readable storage medium has stored computer program instructions. When the computer program instructions are run on a computer, the computer is enabled to perform the resource configuration method as described in any one of the embodiments described above.

For example, the computer-readable storage medium may include, but is not limited to: a magnetic storage device (e.g., a hard disk, a floppy disk, or a magnetic tape), an optical disk (e.g., a compact disk (CD), a digital versatile disk (DVD)), a smart card, and a flash memory device (e.g., an erasable programmable read-only memory (EPROM), a card, a stick, or a key drive). The computer-readable storage media described in the present disclosure may represent one or more devices and/or other machine-readable storage media for storing information. The term "machine-readable storage medium" may include, but is not limited to, radio channels and a variety of other media capable of storing, containing, and/or carrying instructions and/or data.

A computer program product including instructions is provided in the embodiments of the present disclosure. When the computer program product is run on a computer, the computer is enabled to perform the resource configuration method as described in any one of the embodiments described above.

The above are merely specific implementations of the present disclosure, but the protection scope of the present disclosure is not limited thereto. Any variations or replacements within the technical scope disclosed in the present disclosure will fall within the protection scope of the present disclosure. Therefore, the protection scope of the present disclosure will be subject to the protection scope of the claims.

## Claims

1. A resource configuration method, applied to a first node, comprising:
generating first configuration information, wherein the first configuration information is used to indicate a multiplexed transmission resource multiplexed for a reference signal and a data channel; and
transmitting the first configuration information to a second node.

2. The method according to claim 1, wherein the first configuration information is further used to indicate at least one of: a power of the reference signal on the multiplexed transmission resource, sequence information of the reference signal on the multiplexed transmission resource, a power of the data channel on the multiplexed transmission resource, a channel processing method corresponding to the reference signal, or modulation information of the data channel.

3. The method according to claim 1, wherein the first configuration information is further used to indicate a non-multiplexed transmission resource occupied by the reference signal other than the multiplexed transmission resource.

4. The method according to claim 3, wherein the first configuration information is further used to indicate a power of the reference signal on the non-multiplexed transmission resource, and/or sequence information of the reference signal on the non-multiplexed transmission resource.

5. The method according to claim 3, wherein a frequency-domain resource of the multiplexed transmission resource includes a first subcarrier, and a frequency-domain resource of the non-multiplexed transmission resource includes a second subcarrier;
the first subcarrier and the second subcarrier are on different time-domain resources; and/or
the first subcarrier and the second subcarrier are on a same time-domain resource.

6. The method according to claim 3, wherein a time-domain resource of the multiplexed transmission resource includes a first time-domain symbol; a time-domain resource of the non-multiplexed transmission resource includes a second time-domain symbol; and the first time-domain symbol is after the second time-domain symbol.

7. The method according to claim 5, wherein a number of first subcarriers on any first time-domain symbol is greater than a number of second subcarriers on any second time-domain symbol, wherein the first time-domain symbol is a time-domain symbol occupied by the multiplexed transmission resource, and/or a time-domain symbol jointly occupied by the multiplexed transmission resource and the non-multiplexed transmission resource; the second time-domain symbol is a time-domain symbol occupied by the non-multiplexed transmission resource, and/or a time-domain symbol jointly occupied by the non-multiplexed transmission resource and the non-multiplexed transmission resource; or
the number of the first subcarriers on the any first time-domain symbol is less than or equal to the number of the second subcarriers on the any second time-domain symbol; or
a number of first subcarriers in the multiplexed transmission resource is greater than a number of second subcarriers in the non-multiplexed transmission resource; or
the number of the first subcarriers in the multiplexed transmission resource is less than or equal to the number of the second subcarriers in the non-multiplexed transmission resource.

8. The method according to claim 1, wherein the first configuration information is transmitted via downlink control information.

9. The method according to claim 2, wherein the first configuration information includes a first field, and the first field is used to indicate the multiplexed transmission resource, the power of the reference signal on the multiplexed transmission resource, and the power of the data channel on the multiplexed transmission resource; or
the first configuration information includes a second field, and the second field is used to indicate the power of the reference signal on the multiplexed transmission resource, the power of the data channel on the multiplexed transmission resource, and a modulation mode of the data channel on the multiplexed transmission resource; or
the first configuration information includes a third field, and the third field is used to indicate the multiplexed transmission resource, the power of the reference signal on the multiplexed transmission resource, the power of the data channel on the multiplexed transmission resource, and the modulation mode of the data channel on the multiplexed transmission resource; or
the first configuration information includes a fourth field, and the fourth field is used to indicate the power of the reference signal on the multiplexed transmission resource, the power of the data channel on the multiplexed transmission resource, and the modulation information of the data channel; or
the first configuration information includes a fifth field, and the fifth field is used to indicate the multiplexed transmission resource, the power of the reference signal on the multiplexed transmission resource, the power of the data channel on the multiplexed transmission resource, and the modulation information of the data channel.

10. The method according to claim 2, wherein the modulation information of the data channel includes at least two modulation modes, the at least two modulation modes include a modulation mode of the data channel on the multiplexed transmission resource and a modulation mode of the data channel on other transmission resources, and the other transmission resources are transmission resources occupied by the data channel other than the multiplexed transmission resource; and
a number of bits corresponding to each modulation symbol of the data channel on the multiplexed transmission resource is less than or equal to a number of bits corresponding to each modulation symbol of the data channel on the other transmission resources.

11. The method according to claim 2, wherein a value of a number of multiplexed transmission resources is determined based on the modulation information of the data channel; or
a value of the power of the reference signal on the multiplexed transmission resource is determined based on the modulation information of the data channel, and/or a value of the power of the data channel on the multiplexed transmission resource is determined based on the modulation information of the data channel; or
a value of a number of non-multiplexed transmission resources is determined based on the modulation information of the data channel, and the non-multiplexed transmission resource is a transmission resource occupied by the reference signal other than the multiplexed transmission resource; or
a value of a sequence generation mode of the reference signal on the multiplexed transmission resource is determined based on the modulation information of the data channel, and/or a value of a sequence generation mode of the reference signal on the non-multiplexed transmission resource is determined based on the modulation information of the data channel.

12. The method according to claim 2, wherein a sum of the power of the reference signal on the multiplexed transmission resource and the power of the data channel on the multiplexed transmission resource is greater than or equal to a power of the data channel on other transmission resources, and the other transmission resources are transmission resources occupied by the data channel other than the multiplexed transmission resource.

13. A resource configuration method, applied to a second node, comprising:
receiving first configuration information transmitted by a first node, wherein the first configuration information is used to indicate a multiplexed transmission resource multiplexed for a reference signal and a data channel.

14. The method according to claim 13, wherein the first configuration information is further used to indicate at least one of: a power of the reference signal on the multiplexed transmission resource, sequence information of the reference signal on the multiplexed transmission resource, a power of the data channel on the multiplexed transmission resource, a channel processing method corresponding to the reference signal, or modulation information of the data channel.

15. The method according to claim 13, wherein the first configuration information is further used to indicate a non-multiplexed transmission resource occupied by the reference signal other than the multiplexed transmission resource.

16. The method according to claim 15, wherein the first configuration information is further used to indicate a power of the reference signal on the non-multiplexed transmission resource, and/or sequence information of the reference signal on the non-multiplexed transmission resource.

17. The method according to claim 15, wherein a frequency-domain resource of the multiplexed transmission resource includes a first subcarrier, and a frequency-domain resource of the non-multiplexed transmission resource includes a second subcarrier;
the first subcarrier and the second subcarrier are on different time-domain resources; and/or
the first subcarrier and the second subcarrier are on a same time-domain resource.

18. The method according to claim 15, wherein a time-domain resource of the multiplexed transmission resource includes a first time-domain symbol; a time-domain resource of the non-multiplexed transmission resource includes a second time-domain symbol; and the first time-domain symbol is after the second time-domain symbol.

19. The method according to claim 17, wherein a number of first subcarriers on any first time-domain symbol is greater than a number of second subcarriers on any second time-domain symbol, wherein the first time-domain symbol is a time-domain symbol occupied by the multiplexed transmission resource, and/or a time-domain symbol jointly occupied by the multiplexed transmission resource and the non-multiplexed transmission resource; the second time-domain symbol is a time-domain symbol occupied by the non-multiplexed transmission resource, and/or the time-domain symbol jointly occupied by the multiplexed transmission resource and the non-multiplexed transmission resource; or
the number of the first subcarriers on the any first time-domain symbol is less than or equal to the number of the second subcarriers on the any second time-domain symbol; or
a number of first subcarriers in the multiplexed transmission resource is greater than a number of second subcarriers in the non-multiplexed transmission resource; or
the number of the first subcarriers in the multiplexed transmission resource is less than or equal to the number of the second subcarriers in the non-multiplexed transmission resource.

20. The method according to claim 13, wherein the first configuration information is transmitted via downlink control information.

21. The method according to claim 14, wherein the first configuration information includes a first field, and the first field is used to indicate the multiplexed transmission resource, the power of the reference signal on the multiplexed transmission resource, and the power of the data channel on the multiplexed transmission resource; or
the first configuration information includes a second field, and the second field is used to indicate the power of the reference signal on the multiplexed transmission resource, the power of the data channel on the multiplexed transmission resource, and a modulation mode of the data channel on the multiplexed transmission resource; or
the first configuration information includes a third field, and the third field is used to indicate the multiplexed transmission resource, the power of the reference signal on the multiplexed transmission resource, the power of the data channel on the multiplexed transmission resource, and the modulation mode of the data channel on the multiplexed transmission resource; or
the first configuration information includes a fourth field, and the fourth field is used to indicate the power of the reference signal on the multiplexed transmission resource, the power of the data channel on the multiplexed transmission resource, and the modulation information of the data channel; or
the first configuration information includes a fifth field, and the fifth field is used to indicate the multiplexed transmission resource, the power of the reference signal on the multiplexed transmission resource, the power of the data channel on the multiplexed transmission resource, and the modulation information of the data channel.

22. The method according to claim 14, wherein the modulation information of the data channel includes at least two modulation modes, the at least two modulation modes include a modulation mode of the data channel on the multiplexed transmission resource and a modulation mode of the data channel on other transmission resources, and the other transmission resources are transmission resources occupied by the data channel other than the multiplexed transmission resource; and
a number of bits corresponding to each modulation symbol of the data channel on the multiplexed transmission resource is less than or equal to a number of bits corresponding to each modulation symbol of the data channel on the other transmission resources.

23. The method according to claim 14, wherein a value of a number of multiplexed transmission resources is determined based on the modulation information of the data channel; or
a value of the power of the reference signal on the multiplexed transmission resource is determined based on the modulation information of the data channel, and/or a value of the power of the data channel on the multiplexed transmission resource is determined based on the modulation information of the data channel; or
a value of a number of non-multiplexed transmission resources is determined based on the modulation information of the data channel, and the non-multiplexed transmission resource is a transmission resource occupied by the reference signal other than the multiplexed transmission resource; or
a value of a sequence generation mode of the reference signal on the multiplexed transmission resource is determined based on the modulation information of the data channel, and/or a value of a sequence generation mode of the reference signal on the non-multiplexed transmission resource is determined based on the modulation information of the data channel.

24. The method according to claim 14, wherein a sum of the power of the reference signal on the multiplexed transmission resource and the power of the data channel on the multiplexed transmission resource is greater than or equal to a power of the data channel on other transmission resources, and the other transmission resources are transmission resources occupied by the data channel other than the multiplexed transmission resource.

25. A communication device, comprising a memory and a processor, wherein the memory is coupled to the processor; the memory is configured to store instructions executable by the processor; the processor, upon executing the instructions, performs the method according to any one of claims 1 to 24.

26. A computer-readable storage medium, having stored computer instructions that, upon run on a computer, enable the computer to perform the method according to any one of claims 1 to 24.
